# EUROPÄISCHE PATENTSCHRIFT

(11) **EP 1 763 559 B1**
(45) Veröffentlichungstag und Bekanntmachung des Hinweises auf die Patenterteilung: **21.11.2007**
(21) Anmeldenummer: 05751663.5
(22) Anmeldetag: 14.06.2005
(51) Int. Cl.: C08L 63/00, C08G 63/668, C11D 3/37

(54) **HOCHKONZENTRIERTE, WÄSSRIGE FORMULIERUNGEN VON OLIGO-UND POLYESTERN**
HIGHLY CONCENTRATED, AQUEOUS OLIGOESTER AND POLYESTER FORMULATIONS
FORMULATIONS AQUEUSES HAUTEMENT CONCENTREES D'OLIGOESTERS ET DE POLYESTERS

(30) Priorität: 17.06.2004 DE 102004029310
(43) Veröffentlichungstag der Anmeldung: 21.03.2007
(73) Patentinhaber: Clariant Produkte (Deutschland) GmbH, 65929 Frankfurt am Main (DE)
(72) Erfinder: LANG, Frank-Peter, 65795 Hattersheim (DE); WESSLING, Michael, 55270 Ober-Olm (DE)
(74) Vertreter: Mikulecky, Klaus
(86) Internationale Anmeldenummer: PCT/EP2005/006344
(87) Internationale Veröffentlichungsnummer: WO 2005/123835

(56) Entgegenhaltungen:
- US-A- 4 569 772
- US-A- 5 652 283
- US-A- 5 789 366
- US-A- 5 843 878

## Beschreibung

Die Erfindung betrifft wässrige, hochkonzentrierte, fließfähige und lagerstabile Formulierungen von Oligo- und Polyestern und deren Verwendung in Wasch- und Reinigungsmitteln, in der Textilindustrie und in Kosmetika.

Wasserlösliche oder wasserdispergierbare Polyester sind seit langem bekannt. Sie werden in der textilen Ausrüstung (Finishing) zur Hydrophilisierung, zur Verbesserung des Feuchtigkeitstransports, zur Verbesserung der Auswaschbarkeit von hydrophoben Anschmutzungen, wie z.B. Fetten und Ölen, und zur Verbesserung der Antistatik von Polyestergeweben eingesetzt.
Bekannt ist auch deren Verwendung als so genannte Soil Release Polymere in Wasch- und Reinigungsmitteln für Textilien. Auch hier dienen sie zur Verbesserung der Schmutzablösung von Synthesefasern, insbesondere von Polyester und Polyestermischgeweben.
Ferner ist die Anwendung bestimmter wasserlöslicher Oligo- bzw. Polyester in kosmetischen Zubereitungen wie Hautcremes oder Duschgelen bekannt, in denen sie zur Verbesserung des Hautgefühls (skin conditioner) dienen.

Bei diesen wasserlöslichen oder wasserdispergierbaren Polyestern handelt es sich um Polykondensate auf der Basis von Dicarbonsäuren und Edukten, welche über zwei oder mehr Hydroxygruppen verfügen. Als Dicarbonsäure wird üblicherweise Terephthalsäure verwendet. Neben dieser können weitere zwei oder mehrbasische Carbonsäuren, wie z.B. Isophthalsäure, enthalten sein. Als Edukte mit mehreren Hydroxygruppen (Polyole) werden z.B. Ethylenglykol, Propylenglykol, Butylenglykol, deren Dimere, Trimere, Oligomere oder Polymere eingesetzt. Auch Komponenten, welche über drei oder mehrere Hydroxygruppen verfügen, wie z.B. Glycerin oder Pentaerythrit können enthalten sein. Monofunktionelle Edukte, wie z.B. Methylpolyethylenglykole werden als Endcaps zur Steuerung des Molekulargewichts der Polyester eingesetzt.

Für die Verwendung der Polyester als Soil Release Polymere in flüssigen Wasch- und Reinigungsmitteln werden diese in unverdünnter Form, als pastenförmige oder wachsartige Produkte, oder in der Form wässriger Zubereitungen angeboten.

Die unverdünnten Produkte haben den Nachteil, dass Sie zunächst geschmolzen werden müssen, damit sie anschließend in flüssiger, gieß- oder pumpbarer Form einer flüssigen Wasch-oder Reinigungsmittelformulierung zudosiert werden können.
Hierfür müssen aber beheizbare Lagerbehältnisse und Rohrleitungen bereitgestellt werden, was einen nicht unerheblichen technischen Aufwand darstellt.

Die handelsüblich verfügbaren wässrigen Zubereitungen haben wiederum den Nachteil, dass sie nur mit relativ niedrigen Wirkstoffgehalten herstellbar sind. Ein weiterer Nachteil aller wässrigen Polyesterzubereitungen ist es, dass sie nur eine sehr beschränkte physikalische Lagerstabilität besitzen. So können z.B. klare Zubereitungen, insbesondere bei erhöhter Lagertemperatur, schon nach kurzer Zeit eintrüben und es kann sich in der Folge ein Niederschlag abscheiden. Wässrige Dispersionen neigen zur Phasentrennung, wobei die in Wasser dispergierten Polymerteilchen langsam sedimentieren.

Aufgabe der vorliegenden Erfindung ist es, eine hochkonzentrierte, wässrige Zubereitung von Oligo- und Polyestern bereitzustellen, welche eine gute physikalische Stabilität und eine niedrige Viskosität besitzt und somit vom Anwender einfach zu lagern und zu verarbeiten ist.

Es wurde nun überraschenderweise gefunden, dass dieses Ziel durch die Zugabe einer Polycarbonsäure oder eines Polycarboxylats erreicht werden kann.

Gegenstand der Erfindung sind hochkonzentrierte, wässrige Formulierungen von Oligo- und Polyestern, die im wesentlichen 30 bis 90 Gew.-% eines Soil Release Polyesters und 0,1 bis 40 Gew.-% einer Polycarbonsäure oder Polycarboxylats enthalten.

Die wasserlöslichen oder wasserdispergierbaren Oligo- bzw. Polyester für die hochkonzentrierten, wässrigen Formulierungen können nichtionisch oder anionisch sein.
Nichtionische Oligo- und Polyester werden z.B. in den folgenden Patentschriften beschrieben: US 3,712,873, US 3,959,230, US 4,116,885, EP 0 442 101, DE 44 03 866, EP 253 567, EP 357 280 und DE 195 22 431.

Nichtionische Oligo- und Polyester können auf Basis der folgenden Monomere aufgebaut sein:
Zweiwertige Alkohole (Glykole), insbesondere Ethylenglykol; 1,2-Propylenglykol; 1,3-Propylenglykol; 1,2-Butylenglykol; 2,3-Butylenglykol; 1,4-Butylenglykol; Pentandiole; 3-Methoxy-1,2-propylenglykol.

Mehrwertige Alkohole, insbesondere Glycerin, Pentaerythrit, Oligoglycerine sowie deren alkoxylierte Folgeprodukte.

Additionsprodukte, von 1 bis 5 mol Ethylenoxid und/oder Propylenoxid an 1 mol der oben genannten mindestens zweiwertigen Alkohole, wie z.B. Ethylendiglykol, Propylendiglykol, Additionsprodukte von 1 bis 3 mol Ethylenoxid und/oder Propylenoxid an 1 mol Glycerin, Additionsprodukte von 1 bis 4 mol Ethylenoxid und/oder Propylenoxid an Pentaerythrit.

Polyalkylenglykole. Diese leiten sich bevorzugt von Ethylenoxid, Propylenoxid, n-Butylenoxid oder Isobutylenoxid ab. Dabei kann es sich um Homopolymere, Copolymere oder Terpolymere der genannten Alkylenoxide handeln. Bei den Copolymeren kann es sich um Blockcopolymere, um statistische Copolymere oder um alternierende Copolymere handeln. Bevorzugt verwendet man Polyethylenglykol, Polypropylenglykol oder deren Blockcopolymere.

Alkylenoxidanlagerungsprodukte, insbesondere wasserlösliche Anlagerungsprodukte von 5 bis 80 mol Alkylenoxid(en) an 1 mol C₈- bis C₂₄-Alkohole, C₆- bis C₁₈-Alkylphenole oder C₈- bis C₂₄-Alkylamine. Bevorzugte Alkylenoxide sind Ethylenoxid, Propylenoxid, Butylenoxid sowie deren Mischungen.
Aliphatische Dicarbonsäuren. Geeignete aliphatische Dicarbonsäuren enthalten z.B. 2 bis 10 Kohlenstoffatome. Beispiele hierfür sind Oxalsäure, Malonsäure, Bernsteinsäure, Glutarsäure, Adipinsäure, Maleinsäure, Fumarsäure, Itaconsäure und Citraconsäure. Sie können einzeln oder in Mischung eingesetzt werden. Auch Mischungen mit den im Folgenden genannten aromatischen Dicarbonsäuren sind möglich.

Aromatische Dicarbonsäuren, insbesondere Terephthalsäure, Isophthalsäure. Phthalsäure.

Monohydroxymonocarbonsäuren, insbesondere Glykolsäure, Milchsäure, ω-Hydroxy-stearinsäure und w-Hydroxycapronsäure.

Monocarbonsäuren, wie z.B. Benzoesäure, können ebenfalls als monofunktionelle Edukte zur Steuerung des Molekulargewichts eingesetzt werden.

Ester und Anhydride. Die vorgenannten Carbonsäuren können auch in der Form ihrer Ester oder, falls zugänglich, ihrer Anhydride eingesetzt werden. Beispiele hierfür sind Dimethyl-terephthalat, Diethyl-terephthalat, Oxalsäurediethylester, Adipinsäure-dimethylester, Phthalsäureanhydrid, Maleinsäureanhydrid, Bernsteinsäureanhydrid.

Anionische Oligo- und Polyester werden z.B. beschrieben in US 4,427,557; US 4,721,580; US 5,691,298; US 5,700,386; US 5,843,878; WO 96/18715; WO 95/02028; WO 95/02029 und EP 707627.

Zur Herstellung anionischer Oligo- und Polyester werden neben den zuvor genannten, für die Herstellung nichtionischer Polyester verwendeten Komponenten zusätzlich z.B. Hydroxyethansulfonsäure, Hydroxypropansulfonsäure, deren Umsetzungsprodukte mit Alkylenoxiden, bevorzugt mit Ethylenoxid und/ oder Propylenoxid, Glycerinsulfoethylether, Glycerinsulfopropylether, Sulfoisophthalsäure und Sulfobenzoesäure einkondensiert.

Oligo- und Polyester, die erfindungsgemäß eingesetzt werden können, haben vorzugsweise folgende Struktur: 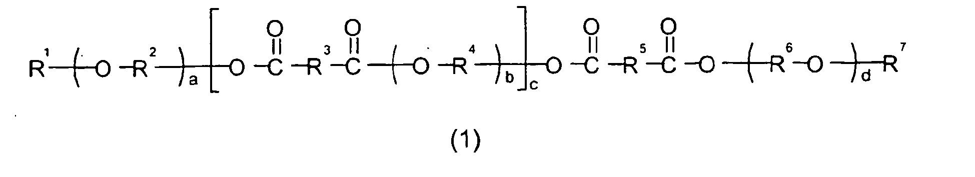 worin
- R¹ und R⁷: lineares oder verzweigtes C₁-C₁₈ Alkyl
- R², R⁴, R⁶: unabhängig voneinander Alkylen, z.B. Ethylen, Propylen, Butylen und/oder Cycloalkylen, z.B. 1,4-Cyclohexylen oder 1,4-Dimethylen-cyclohexylen sowie deren Gemische
- R³ und R⁵: Arylen oder Alkarylen, wie z.B. 1,4-Phenylen, 1,3-Phenylen, 1,2-Phenylen, 1,8-Naphthylen, 1,4-Naphthylen, 2,2'-Biphenylen, 4,4'-Biphenylen und deren Mischungen und/oder Alkylen oder Alkenylen, wie z.B. Methylen, Ethylen, Propylen, Butylen, Pentylen, Hexylen und deren Mischungen
- a, b und d: eine Zahl zwischen 1 und 200
- c: eine Zahl zwischen 1 und 20.

Bevorzugt sind Oligo- und Polyester der Formel (1), worin
- R¹ und R⁷: Methyl und/oder Ethyl,
- R², R⁴, R⁶: Ethylen, 1,2-Propylen, oder deren Gemische
- R³ und R⁵: 1,4-Phenylen und 1,3-Phenylen und
- a, b und d: eine Zahl zwischen 1 und 100
- c: eine Zahl zwischen 1 und 10
bedeuten.

Bevorzugte Oligo- bzw. Polyester sind auch solche der Formel (2) 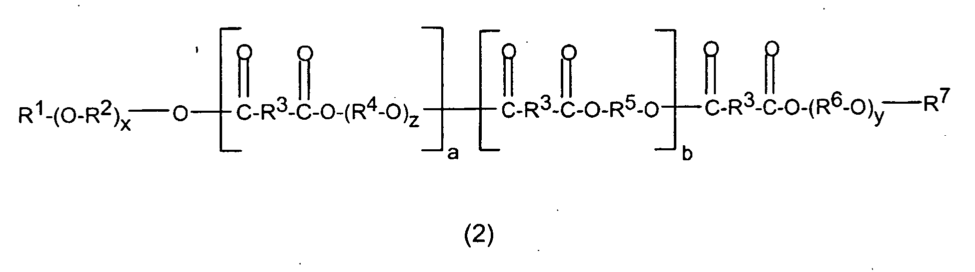 worin
R¹ und R⁷ lineares oder verzweigtes C₁-C₁₈-Alkyl, R² und R⁶ Ethylen, R³ 1,4-Phenylen, 1,3-Phenylen, R⁴ Ethylen, R⁵ Ethylen, 1,2-Propylen oder statistische Gemische von beliebiger Zusammensetzung von beiden, x und y unabhängig voneinander eine Zahl zwischen 1 und 500, z eine Zahl zwischen 10 und 140, a eine Zahl zwischen 1 und 12, b eine Zahl zwischen 7 und 40,
bedeuten, wobei
a + b mindestens gleich 11 ist.

Bevorzugt bedeuten unabhängig voneinander in der Formel (2)
R¹ und R⁷ lineares oder verzweigtes C₁-C₄-Alkyl, x und y eine Zahl zwischen 3 und 45, z eine Zahl zwischen 18 und 70, a eine Zahl zwischen 2 und 5, b eine Zahl zwischen 8 und 12, a + b eine Zahl zwischen 12 und 18 oder zwischen 25 und 35.

Die erfindungsgemäßen Formulierungen enthalten neben den Oligo- und Polyestern Polycarbonsäuren oder Polycarboxylate. Als Polycarbonsäuren bzw. Polycarboxylate kommen beispielsweise Verbindungen der Formel (3) in Frage 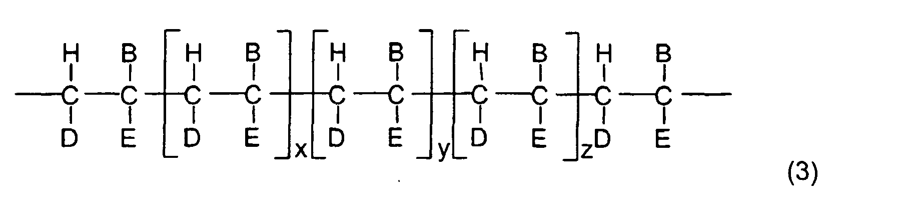 worin B Wasserstoff, C₁-C₄-Alkyl, insbesondere Methyl, Ethyl, Propyl, -COOM, -CH₂-COOM,
D Wasserstoff, C₁-C₄-Alkyl, insbesondere Methyl oder -COOM,
E Wasserstoff, C₁-C₄-Alkyl, insbesondere Methyl, Ethyl; Cycloalkyl, insbesondere Cyclohexyl; Aryl, insbesondere Phenyl, -COOM, -CH₂-COOM, C₁-C₄-Acyl, insbesondere Acetyl; -OH, C₁-C₄-Alkoxy, insbesondere -OCH₃; Halogen, insbesondere Chlor oder -CN, x eine Zahl von 0 bis 3.500, y eine Zahl von 0 bis 3.500, z eine Zahl von 0 bis 3.500, M Wasserstoff, Natrium, Kalium, Lithium, Ammonium oder substituiertes Ammonium bedeuten, wobei mindestens ein Index x, y oder z größer Null ist. Die Substituenten B, D und E können gleich oder verschieden sein.

Die folgenden Monomere können beispielsweise in den Polycarbonsäuren bzw. Polycarboxylaten der Formel (3) enthalten sein:
Acrylsäure, Methacrylsäure, Maleinsäure, Fumarsäure, Itaconsäure,
Citraconsäure, Mesaconsäure, Aconitsäure, Methylenmalonsäure.
Diese können zu einem Teil auch in Form ihrer Ester vorliegen, z.B. verestert mit Methanol, Ethanol oder Propanol.
Des weiteren können beispielsweise die folgenden carboxylgruppenfreien Co-Monomere enthalten sein: Olefine, bevorzugt Ethylen, Propylen und Butylen, Vinylacetat, Vinylalkohol, Styrol, Vinylmethylether, Vinylcyclohexan, Vinylchlorid, Acrylnitril, Vinylimidazolin, Vinylpyrrolidon.

Bei den Polycarbonsäuren der allgemeinen Formel (3) kann es sich um Homopolymere, Copolymere und Terpolymere handeln.
Homopolymere sind insbesondere Polyacrylsäuren mit einer Molmasse bis 250.000, bevorzugt von 2.000 bis 100.000 und Polymaleinsäure. Bei Polycarbonsäuren, die aus zwei oder mehr Monomeren aufgebaut sind, kann es sich um statistische Copolymere, Blockcopolymere, alternierende Copolymere oder Pfropfcopolymere handeln.
Copolymere enthalten beispielsweise zwei carboxylgruppenhaltige Monomere und gegebenenfalls weitere Co-Monomere. Sie können aber auch nur ein carboxylgruppenhaltiges Monomer zusammen mit anderen vinylischen Monomeren polymerisiert enthalten.

Besonders bevorzugt sind Copolymere auf Basis Acrylsäure und Maleinsäure, Maleinsäure und Olefinen (insbesondere Ethylen), Maleinsäure und Vinylmethylether, Acrylsäure und Olefinen (insbesondere Ethylen) sowie Acrylsäure und Vinylmethylether.

Erfindungsgemäß kommen auch Etherpolycarboxylate in Frage. Etherpolycarboxylate werden z.B. beschrieben in US 3,128,287 und US 3,635,830. Dabei handelt es sich um Oxydisuccinate.
Eine spezielle Gruppe von Etherpolycarboxylaten, die gemäß der vorliegenden Erfindung eingesetzt werden können, entsprechen der allgemeinen Formel (4): 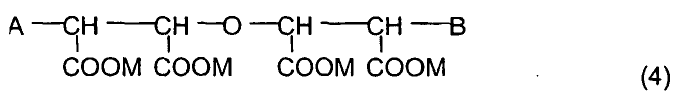 worin A H oder -OH,
B H oder eine Gruppe der Formel 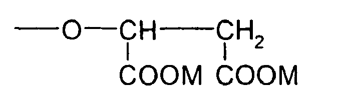 M H, Li, Na, K, Ammonium oder substituiertes Ammonium bedeuten.

### Beispiele für solche Etherpolycarboxylate sind z.B.:

Oxy-dibernsteinsäure und ihre Salze (A und B = H); Tartrat-monobernsteinsäure und ihre Salze (A = -OH und B = H); Tartrat-dibernsteinsäure und ihre Salze

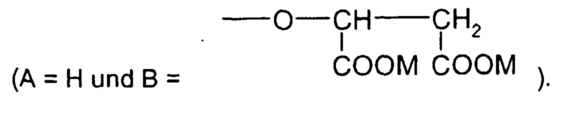

Auch Mischungen verschiedener Ether-polycarboxylate können eingesetzt werden.

Ferner können cyclische Ethercarboxylate verwendet werden, wie z.B. beschrieben in US 3,923,679 ; US 3,835,163 ; US 4,158,635; US 4,120,874 und US 4,102,903.

Weiterhin können Etherhydroxypolycarboxylate gemäß Formel (5) eingesetzt werden. 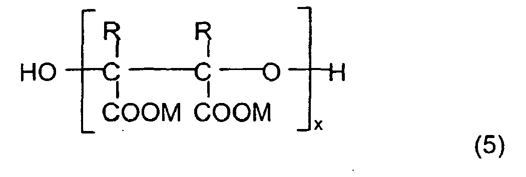 worin M H, Li, Na, K, Ammonium, substituiertes Ammonium, x eine Zahl von 2 bis 15 und R Wasserstoff oder C₁-C₄-Alkyl bedeuten.

Die erfindungsgemäßen Formulierungen können 30 bis 90, bevorzugt 50 bis 90, besonders bevorzugt 70 bis 80 Gew.-% Oligo- bzw. Polyester enthalten. Der Gehalt an Polycarbonsäure bzw. Polycarboxylat kann 0,1 bis 40, bevorzugt 0,1 bis 25, besonders bevorzugt 0,1 bis 10 und ganz besonders bevorzugt 0,5 bis 5 Gew.-% in der erfindungsgemäßen Formulierung betragen.

Die erfindungsgemäßen hochkonzentrierten, wässrigen Oligo- und Polyesterzubereitungen werden in der Regel in Konzentrationen von kleiner 5 Gew.-%, bevorzugt zu kleiner 1,5 Gew.-% und besonders bevorzugt zu 0,5 bis 1 Gew.-% in Wasch- und Reinigungsmittelformulierungen eingesetzt (Konzentrationsangaben hier bezogen auf den Polyesteranteil in der Zubereitung).

Die Wasch- und Reinigungsmittelformulierungen, in denen die erfindüngsgemäßen wässrigen, hochkonzentrierten Oligo- und Polyesterzubereitungen eingesetzt werden können, sind bevorzugt Flüssigwaschmittel, Waschgele und Waschpasten, aber auch Pulver, Granulate, Pellets, Tabletten und Waschstücke ("Bars", "Blocks").
In Flüssigwaschmitteln, Waschgelen und Waschpasten können die genannten Zubereitungen mittels mechanischen Homogenisiereinrichtungen wie Rührern einfach eingearbeitet werden.
In festen Waschmitteln, wie Waschpulvern, können die genannten Zubereitungen mittels Aufsprühen, ggf. in Mischung mit anderen flüssigen Waschmittelkomponenten, auf das Waschpulver oder auf einzelne pulverförmige Bestandteile, wie z.B. Zeolite, Natriumsulfat, Soda aufgebracht werden.
Die Waschmittel enthaltend die hochkonzentrierten Poly- oder Oligoesterzubereitungen können in Folien verpackt sein, die entweder eine Schutzfunktion bei der Lagerung besitzen oder auch als Dosierhilfe dienen. Die Folien können wasserlöslich sein.
Die hochkonzentrierten, wässrigen Polyesterzubereitungen können außerdem in speziellen Wäschebehandlungsmitteln, wie z.B. Flecklösern oder Waschboostern eingesetzt werden.

Wasch- und Reinigungsmittel, welche die erfindungsgemäßen hochkonzentrierten, wässrigen Oligo- oder Polyesterzubereitungen enthalten, können darüber hinaus weitere übliche Bestandteile enthalten. Diese werden im Folgenden beschrieben:

### Anionische Tenside

Als anionische Tenside kommen Sulfate, Sulfonate, Carboxylate, Phosphate und Mischungen daraus in Betracht. Geeignete Kationen sind hierbei Alkalimetalle, wie z.B. Natrium oder Kalium oder Erdalkalimetalle, wie z.B. Calcium oder Magnesium sowie Ammonium, substituierte Ammoniumverbindungen, einschließlich Mono-, Di- oder Triethanolammoniumkationen, und Mischungen daraus.

Folgende Typen von anionischen Tensiden sind besonders bevorzugt: Alkylestersulfonate, Alkylsulfate, Alkylethersulfate, Alkylbenzolsulfonate, Alkansulfonate und Seifen, wie im Folgenden beschrieben.

Alkylestersulfonate sind unter anderem lineare Ester von C₈-C₂₀-Carboxylsäuren (d.h. Fettsäuren), welche mittels gasförmigem SO₃ sulfoniert werden, wie in "The Journal of the American Oil Chemists Society" 52 (1975), pp. 323-329 beschrieben wird.

Geeignete Ausgangsmaterialien sind natürliche Fette, wie z.B. Talg, Kokosöl und Palmöl, können aber auch synthetischer Natur sein.

Bevorzugte Alkylestersulfonate, speziell für Waschmittelanwendungen, sind Verbindungen der Formel 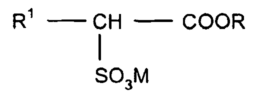 worin R¹ einen C₈-C₂₀-Kohlenwasserstoffrest, bevorzugt Alkyl, und R einen C₁-C₆ Kohlenwasserstoffrest, bevorzugt Alkyl, darstellt. M steht für ein Kation, das ein wasserlösliches Salz mit dem Alkylestersulfonat bildet. Geeignete Kationen sind Natrium, Kalium, Lithium oder Ammoniumkationen, wie Monoethanolamin, Diethanolamin und Triethanolamin. Bevorzugt bedeuten R¹ C₁₀-C₁₆-Alkyl und R Methyl, Ethyl oder Isopropyl. Besonders bevorzugt sind Methylestersulfonate, in denen R¹ C₁₀-C₁₆-Alkyl bedeutet.

Alkylsulfate sind hier wasserlösliche Salze oder Säuren der Formel ROSO₃M, worin R ein C₁₀-C₂₄-Kohlenwasserstoffrest, bevorzugt ein Alkyl- oder Hydroxyalkylrest mit C₁₀-C₂₀-Alkylkomponente, besonders bevorzugt ein C₁₂-C₁₈ Alkyl- oder Hydroxyalkylrest ist.

M ist Wasserstoff oder ein Kation, z.B. ein Alkalimetallkation (z.B. Natrium, Kalium, Lithium) oder Ammonium oder substituiertes Ammonium, z.B. Methyl-, Dimethyl- und Trimethylammoniumkationen und quaternäre Ammoniumkationen wie Tetramethylammonium- und Dimethylpiperidiniumkationen und quartäre Ammoniumkationen, abgeleitet von Alkylaminen, wie Ethylamin, Diethylamin, Triethylamin und Mischungen davon.
Alkylketten mit C₁₂-C₁₆ sind für niedrige Waschtemperaturen (z.B. unter ca. 50°C) und Alkylketten mit C₁₆-C₁₈ für höhere Waschtemperaturen (z.B. oberhalb ca. 50°C) bevorzugt.

Alkylethersulfate sind wasserlösliche Salze oder Säuren der Formel RO(A)ₘ SO₃M worin R einen unsubstituierten C₁₀-C₂₄-Alkyl- oder Hydroxyalkylrest, bevorzugt einen C₁₂-C₂₀ Alkyl- oder Hydroxyalkylrest, besonders bevorzugt C₁₂-C₁₈-Alkyl- oder Hydroxyalkylrest darstellt.

A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation, wie z.B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quarternäre Ammoniumkationen wie Tetramethylammonium und Dimethylpiperidiniumkationen sowie solche, die von Alkylaminen, wie Ethylamin, Diethylamin, Triethylamin oder Mischungen davon abgeleitet sind. Als Beispiele seien C₁₂- bis C₁₈-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

In sekundären Alkansulfonaten kann die Alkylgruppe entweder gesättigt oder ungesättigt, verzweigt oder linear und gegebenenfalls mit einer Hydroxylgruppe substituiert sein.
Die Sulfogruppe kann an einer beliebigen Position der C-Kette sein, wobei die primären Methylgruppen am Kettenanfang und Kettenende keine Sulfonatgruppen besitzen.

Die bevorzugten sekundären Alkansulfonate enthalten lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt.
Neben sekundären Alkansulfonaten können auch primäre Alkansulfonate in den erfindungsgemäßen Waschmitteln eingesetzt werden.

Die bevorzugten Alkylketten und Kationen entsprechen denen der sekundären Alkansulfonaten.
Die Herstellung von primärer Alkansulfonsäure, aus der die als Tensid wirksamen entsprechenden Sulfonate erhalten werden, ist z.B. in EP 854 136-A1 beschrieben.

Weitere geeignete anionische Tenside sind Alkenyl- oder Alkylbenzolsulfonate. Die Alkenyl- oder Alkylgruppe kann verzweigt oder linear und gegebenenfalls mit einer Hydroxylgruppe substituiert sein. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon.
Für milde Tensidsysteme ist Magnesium als Kation bevorzugt, für Standardwaschanwendungen dagegen Natrium. Gleiches gilt für Alkenylbenzolsulfonate.

Der Begriff anionische Tenside schließt auch Olefinsulfonate mit ein, die durch Sulfonierung von C₈-C₂₄-, vorzugsweise C₁₄-C₁₆-α-Olefinen mit Schwefeltrioxid und anschließende Neutralisation erhalten werden. Bedingt durch das Herstellverfahren, können diese Olefinsulfonate kleinere Mengen an Hydroxyalkansulfonaten und Alkandisulfonaten enthalten. Spezielle Mischungen von α-Olefinsulfonaten sind in US-3,332,880 beschrieben.

Weitere bevorzugte anionische Tenside sind Carboxylate, z.B. Fettsäureseifen und vergleichbare Tenside. Die Seifen können gesättigt oder ungesättigt sein und können verschiedene Substituenten, wie Hydroxylgruppen oder α-Sulfonatgruppen enthalten. Bevorzugt sind lineare gesättigte oder ungesättigte Kohlenwasserstoffreste als hydrophober Anteil mit ca. 6 bis ca. 30, bevorzugt ca. 10 bis ca. 18 Kohlenstoffatomen.

Als anionische Tenside kommen weiterhin Salze von Acylaminocarbonsäuren in Frage, die durch Umsetzung von Fettsäurechloriden mit Natriumsarkosinat im alkalischen Medium entstehenden Acylsarcosinate; Fettsäure-Eiweiß-Kondensationsprodukte, die durch Umsetzung von Fettsäurechloriden mit Oligopeptiden erhalten werden; Salze von Alkylsulfamidocarbonsäuren; Salze von Alkyl- und Alkylarylethercarbonsäuren; sulfonierte Polycarboxylsäuren, hergestellt durch Sulfonierung der Pyrolyseprodukte von Erdalkalimetallcitraten, wie z.B. beschrieben in GB-1,082,179; Alkyl- und Alkenylglycerinsulfate wie Oleylglycerinsulfate, Alkylphenolethersulfate, Alkylphosphate, Alkyletherphosphate, Isethionate, wie Acylisethionate, N-Acyltauride, Alkylsuccinate, Sulfosuccinate, Monoester der Sulfosuccinate (besonders gesättigte und ungesättigte C₁₂-C₁₈-Monoester) und Diester der Sulfosuccinate (besonders gesättigte und ungesättigte C₁₂-C₁₈-Diester), Acylsarcosinate, Sulfate von Alkylpolysacchariden wie Sulfate von Alkylpolyglycosiden, verzweigte primäre Alkylsulfate und Alkylpolyethoxycarboxylate wie die der Formel RO(CH₂CH₂)ₖCH₂COO⁻M⁺, worin R C₈ bis C₂₂-Alkyl, k eine Zahl von 0 bis 10 und M ein Kation ist.
Weitere Beispiele sind in "Surface Active Agents and Detergents" (Vol. I und II, Schwartz, Perry und Berch) beschrieben.

### Nichtionische Tenside.

Kondensationsprodukte von aliphatischen Alkoholen mit ca. 1 bis ca. 25 mol Ethylenoxid.

Die Alkylkette der aliphatischen Alkohole kann linear oder verzweigt, primär oder sekundär sein, und enthält im Allgemeinen ca. 8 bis ca. 22 Kohlenstoffatome.

Besonders bevorzugt sind die Kondensationsprodukte von C₁₀- bis C₂₀-Alkoholen mit ca. 2 bis ca. 18 mol Ethylenoxid pro mol Alkohol. Die Alkylkette kann gesättigt oder auch ungesättigt sein. Die Alkoholethoxylate können eine enge ("Narrow Range Ethoxylates") oder eine breite Homologenverteilung des Ethylenoxides ("Broad Range Ethoxylates") aufweisen.

Beispiele von kommerziell erhältlichen nichtionischen Tensiden dieses Typs sind Tergitol^{®} 5-S-9 (Kondensationsprodukt eines linearen sekundären C₁₁-C₁₅-Alkohols mit 9 mol Ethylenoxid), Tergitol^{®} 24-L-NMW (Kondensationsprodukt eines linearen primären C₁₂-C₁₄-Alkohols mit 6 mol Ethylenoxid bei enger Molgewichtsverteilung). Ebenfalls unter diese Produktklasse fallen die Genapol^{®}-Marken der Clariant GmbH.

Kondensationsprodukte von Ethylenoxid mit einer hydrophoben Basis, gebildet durch Kondensation von Propylenoxid mit Propylenglykol.

Der hydrophobe Teil dieser Verbindungen weist bevorzugt ein Molekulargewicht zwischen ca. 1500 und ca. 1800 auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu ca. 40 mol Ethylenoxid entspricht. Kommerziell erhältliche Beispiele dieser Produktklasse sind die Pluronic^{®}-Marken der BASF und die ^{®}Genapol PF-Marken der Clariant GmbH.
Kondensationsprodukte von Ethylenoxid mit einem Reaktionsprodukt von Propylenoxid und Ethylendiamin.

Die hydrophobe Einheit dieser Verbindungen besteht aus dem Reaktionsprodukt von Ethylendiamin mit überschüssigem Propylenoxid und weist im Allgemeinen ein Molekulargewicht von ca. 2500 bis 3000 auf. An diese hydrophobe Einheit wird Ethylenoxid bis zu einem Gehalt von ca. 40 bis ca. 80 Gew.-% Polyoxyethylen und einem Molekulargewicht von ca. 5000 bis 11000 addiert.

Kommerziell erhältliche Beispiele dieser Verbindungsklasse sind die ^{®}Tetronic-Marken der BASF und die ^{®}Genapol PN-Marken der Clariant GmbH.

### Semipolare nichtionische Tenside

Diese Kategorie von nichtionischen Verbindungen umfasst wasserlösliche Aminoxide, wasserlösliche Phosphinoxide und wasserlösliche Sulfoxide, jeweils mit einem Alkylrest von ca. 10 bis ca. 18 Kohlenstoffatomen. Semipolare nichtionische Tenside sind auch Aminoxide der Formel 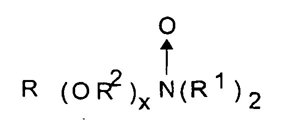 R ist hierbei eine Alkyl-, Hydroxyalkyl- oder Alkylphenolgruppe mit einer Kettenlänge von ca. 8 bis ca. 22 Kohlenstoffatomen, R² ist eine Alkylen- oder Hydroxyalkylengruppe mit ca. 2 bis 3 Kohlenstoffatomen oder Mischungen hiervon, jeder Rest R¹ ist eine Alkyl- oder Hydroxyalkylgruppe mit ca. 1 bis ca. 3 Kohlenstoffatomen oder eine Polyethylenoxidgruppe mit ca. 1 bis ca. 3 Ethylenoxideinheiten und x bedeutet eine Zahl von 0 bis etwa 10. Die R'-Gruppen können miteinander über ein Sauerstoff- oder Stickstoffatom verbunden sein und somit einen Ring bilden. Aminoxide dieser Art sind besonders C₁₀-C₁₈-Alkyldimethylaminoxide und C₈-C₁₂-Alkoxiethyl-Dihydroxyethylaminoxide.

### Fettsäureamide

Fettsäureamide besitzen die Formel 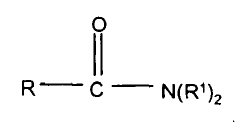 worin R eine Alkylgruppe mit ca. 7 bis ca. 21, bevorzugt ca. 9 bis ca. 17 Kohlenstoffatomen ist und jeder Rest R¹ Wasserstoff, C₁-C₄-Alkyl, C₁-C₄-Hydroxyalkyl oder (C₂H₄O)ₓH bedeutet, wobei x von ca. 1 bis ca. 3 variiert. Bevorzugt sind C₈-C₂₀-Amide, -monoethanolamide, -diethanolamide und -isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate.

Polyethylen-, Polypropylen- und Polybutylenoxidkondensate von Alkylphenolen.

Diese Verbindungen umfassen die Kondensationsprodukte von Alkylphenolen mit einer C₆- bis C₂₀-Alkylgruppe, die entweder linear oder verzweigt sein kann, mit Alkenoxiden. Bevorzugt sind Verbindungen mit ca. 5 bis 25 mol Alkenoxid pro mol Alkylphenol. Kommerziell erhältliche Tenside dieses Typs sind z.B. lgepal^{®} CO-630, Triton^{®} X-45, X-114, X-100 und X102, und die ^{®}Arkopal-N-Marken der Clariant GmbH. Diese Tenside werden als Alkylphenolalkoxilate, z.B. Alkylphenolethoxilate, bezeichnet.

### Zwitterionische Tenside

Typische Beispiele für amphotere bzw. zwitterionische Tenside sind Alkylbetaine, Alkylamidbetaine, Aminopropionate, Aminoglycinate, oder amphotere Imidazoünium-Verbindungen der Formel 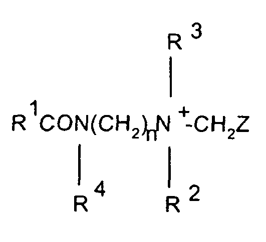 worin R¹ C₈-C₂₂-Alkyl- oder -Alkenyl, R² Wasserstoff oder CH₂CO₂M, R³ CH₂CH₂OH oder CH₂CH₂OCH₂CH₂C R⁴ Wasserstoff, CH₂CH₂OH oder CH₂CH₂COOM, Z CO₂ oder CH₂CO₂M, n 2 oder 3, bevorzugt 2, M Wasserstoff oder ein Kation wie Alkalimetall, Erdalkalimetall, Ammonium oder Alkanolammonium bedeutet.

Bevorzugte amphotere Tenside dieser Formel sind Monocarboxylate und Dicarboxylate. Beispiele hierfür sind Cocoamphocarboxypropionat, Cocoamidocarboxypropionsäure, Cocoamphocarboxyglycinat (oder auch als Cocoamphodiacetat bezeichnet) und Cocoamphoacetat.

Weitere bevorzugte amphotere Tenside sind Alkyldimethylbetaine (^{®}Genagen LAB/ Clariant GmbH) und Alkyldipolyethoxybetaine mit einem Alkylrest mit ca. 8 bis ca. 22 Kohlenstoffatomen, der linear oder verzweigt sein kann, bevorzugt mit 8 bis 18 Kohlenstoffatomen und besonders bevorzugt mit ca. 12 bis ca. 18 Kohlenstoffatomen.

Geeignete kationische Tenside sind substituierte oder unsubstituierte geradkettige oder verzweigte quartäre Ammoniumsalze vom Typ R¹N(CH₃)₃⁺X⁻, R¹R²N(CH₃)₂⁺X⁻, R¹R²R³N(CH₃)⁺X⁻ oder R¹R²R³R⁴N⁺X⁻. Die Reste R¹, R², R³ und R⁴ können vorzugsweise unabhängig voneinander unsubstituiertes Alkyl mit einer Kettenlänge zwischen 8 und 24 C-Atomen, insbesondere zwischen 10 und 18 C-Atomen, Hydroxyalkyl mit ca. 1 bis ca. 4 C-Atomen, Phenyl, C₂- bis C₁₈-Alkenyl, C₇- bis C₂₄-Aralkyl, (C₂H₄O)ₓH, wobei x von ca. 1 bis ca. 3 bedeutet, ein oder mehrere Estergruppen enthaltende Alkylreste oder cyclische quartäre Ammoniumsalze sein. X ist ein geeignetes Anion.

Weitere Waschmittelinhaltsstoffe, die in der vorliegenden Erfindung enthalten sein können, umfassen anorganische und/oder organische Gerüststoffe, um den Härtegrad des Wassers zu mindern.

Diese Gerüststoffe können mit Gewichtsanteilen von etwa 5 % bis etwa 80 % in den Wasch- und Reinigungsmittelzusammensetzungen enthalten sein. Anorganische Gerüststoffe umfassen beispielsweise Alkali-, Ammonium- und Alkanolammoniumsalze von Polyphosphaten wie etwa Tripolyphosphate, Pyrophosphate und glasartige polymere Metaphosphate, Phosphonaten, Silikaten, Carbonaten einschließlich Bicarbonate und Sesquicarbonate, Sulfaten und Aluminosilikaten.

Beispiele für Silikatgerüststoffe sind die Alkalimetallsilikate, insbesondere diejenigen mit einem SiO₂:Na₂O-Verhältnis zwischen 1,6:1 und 3,2:1 sowie Schichtsilikate, beispielsweise Natriumschichtsilikate, wie beschrieben in US-4,664,839, erhältlich von Clariant GmbH unter der Marke SKS^{®}. SKS-6^{®} ist ein besonders bevorzugter Schichtsilikatgerüststoff.

Aluminosilikatgerüststoffe sind für die vorliegende Erfindung besonders bevorzugt. Es handelt sich dabei insbesondere um Zeolithe mit der Formel Na_{z}[(AlO₂)_{z}(SiO₂)_{y}]·xH₂O, worin z und y ganze Zahlen von mindestens 6 bedeuten, das Verhältnis von z zu y zwischen 1,0 bis etwa 0,5 liegt, und x eine ganze Zahl von etwa 15 bis etwa 264 bedeutet.

Geeignete Ionentauscher auf Aluminosilikatbasis sind im Handel erhältlich. Diese Aluminosilikate können von kristalliner oder amorpher Struktur sein, und können natürlich vorkommend oder auch synthetisch hergestellt sein. Verfahren für die Herstellung von Ionentauschern auf Aluminosilikatbasis werden beschrieben in US-3,985,669 und US-4,605,509. Bevorzugte Ionentauscher auf der Basis synthetischer kristalliner Aluminosilikate sind erhältlich unter der Bezeichnung Zeolith A, Zeolith P(B) (einschließlich der in EP-A-0 384 070 offenbarten) und Zeolith X. Bevorzugt sind Aluminosilikate mit einem Partikeldurchmesser zwischen 0,1 und 10 µm.
Geeignete organische Gerüststoffe (Co-Builder) umfassen Polycarboxylverbindungen, wie beispielsweise Etherpolycarboxylate und Oxydisuccinate, wie beispielsweise in
US-3,128,287 und US-3,635,830 beschrieben. Ebenfalls soll auf "TMS/TDS"-Gerüststoffe aus US-4,663,071 verwiesen werden.

Andere geeignete Gerüststoffe umfassen die Etherhydroxypolycarboxylate, Copolymere von Maleinsäureanhydrid mit Ethylen oder Vinylmethylether, 1,3,5-Trihydroxybenzol-2,4,6-trisulfonsäure und Carboxymethyloxybernsteinsäure, die Alkali-, Ammonium- und substituierten Ammoniumsalze von Polyessigsäuren, wie z.B. Ethylendiamin-tetraessigsäure und Nitrilotriessigsäure sowie Polycarbonsäuren, wie Mellithsäure, Bernsteinsäure, Oxydibernsteinsäure, Polymaleinsäure, Benzol-1,3,5-tricarbonsäure, Carboxymethyloxybernsteinsäure sowie deren lösliche Salze.

Wichtige organische Gerüststoffe sind auch Polycarboxylate auf Basis von Acrylsäure und Maleinsäure, wie z.B. die Sokalan CP-Marken der BASF.

Gerüststoffe auf Citratbasis, z.B. Zitronensäure und ihre löslichen Salze, insbesondere das Natriumsalz, sind bevorzugte Polycarbonsäuregerüststoffe, die auch in granulierten Formulierungen, insbesondere zusammen mit Zeolithen und/oder Schichtsilikaten verwendet werden können.

Weitere geeignete Gerüststoffe sind die 3,3-Dicarboxy-4-oxa-1,6-hexandioate und die verwandten Verbindungen, die in US-4,566,984 offenbart sind.

Wenn Gerüststoffe auf Phosphorbasis verwendet werden können, und insbesondere wenn Seifenstücke für die Wäsche von Hand formuliert werden sollen, können verschiedene Alkalimetallphosphate wie etwa Natriumtripolyphosphat, Natriumpyrophosphat und Natriumorthophosphat verwendet werden. Ebenfalls können Phosphonatgerüststoffe, wie Ethan-1-hydroxy-1,1-diphosphonat und andere bekannte Phosphonate, wie sie beispielsweise in US-3,159,581, US-3,213,030, US-3,422,021, US-3,400,148 und US-3,422,137 offenbart sind, verwendet werden.

Die Wasch- und Reinigungsmittel, welche die erfindungsgemäßen hochkonzentrierten, wässrigen Oligo- bzw. Polyesterformulierungen enthalten, können ferner die üblichen Hilfsstoffe enthalten, die die Reinigungswirkung verstärken, zur Pflege des zu waschenden Textils dienen oder die Gebrauchseigenschaften der Waschmittelzusammensetzung ändern.

Geeignete Hilfsmittel umfassen die in US-3,936,537 genannten Stoffe, beispielsweise Enzyme, insbesondere Proteasen, Lipasen, Cellulasen und Amylasen, Mannanasen, Glycosidasen, Enzymstabilisatoren, Schaumverstärker, Schaumbremsen, Anlauf- und/oder Korrosionsschutzmittel, Suspensionsmittel, Farbstoffe, Farbübertragungsinhibitoren, Füllmittel, optische Aufheller, Desinfektionsmittel, Alkalien, hydrotrope Verbindungen, Antioxidantien, Parfüme, Lösungsmittel, Lösungsvermittler, Wiederablagerungsverhinderer, Dispergiermittel, Verarbeitungshilfsmittel, Weichmacher und Antistatika.

Die Waschmittelzusammensetzungen der vorliegenden Erfindung können gegebenenfalls eines oder mehrere konventionelle Bleichmittel enthalten, sowie Bleichaktivatoren, Bleichkatalysatoren und geeignete Stabilisatoren. Im Allgemeinen muss sichergestellt sein, dass die verwendeten Bleichmittel mit den Reinigungsmittelinhaltsstoffen verträglich sind. Konventionelle Prüfmethoden, wie etwa die Bestimmung der Bleichaktivität des fertig formulierten Reinigungsmittels in Abhängigkeit von der Lagerungszeit können für diesen Zweck verwendet werden.

Peroxysäuren können entweder als freie Peroxysäure eingesetzt werden, oder es kann eine Kombination aus einem anorganischen Persalz, beispielsweise Natriumperborat oder Natriumpercarbonat und einem organischen Peroxysäure-Vorläufer verwendet werden.

Die organischen Peroxysäure-Vorläufer werden im Stand der Technik oft als Bleichaktivatoren bezeichnet.
Beispiele geeigneter organischer Peroxysäuren sind offenbart in US-4,374,035, US-4,681,592, US-4,634,551, US-4,686,063, US-4,606,838 und US-4,671,891.

Beispiele für Zusammensetzungen, die zum Bleichen von Wäsche geeignet sind und die Perboratbleichmittel und Aktivatoren enthalten, werden beschrieben in US-4,412,934, US-4,536,314, US-4,681,695 und US-4,539,130.
Beispiele für Peroxysäuren, die für die Verwendung in dieser Erfindung bevorzugt sind, umfassen die Peroxydodecandisäure (DPDA), das Nonylamid der Peroxybernsteinsäure (NAPSA), das Nonylamid der Peroxyadipinsäure (NAPAA) und Decyldiperoxybernsteinsäure (DDPSA), Nonanoyl-amidocaproyl-oxybenzolsulfonsäure und Alkanoyloxybenzolsulfonsäuren wie die Nonanoyloxybenzolsulfonsäure (NOBS) und die Lauroyloxybenzolsulfonsäure (LOBS).

Besonders bevorzugt werden in den erfindungsgemäßen Waschmitteln und Wäschebehandlungsmitteln Bleichsysteme auf Basis eines Persalzes wie Perboraten oder Percarbonaten mit dem Bleichaktivator Tetraacetylethylendiamin (TAED) eingesetzt.

Weiterhin können die erfindungsgemäßen Formulierungen auch in kosmetischen Zubereitungen wie Hautreinigungsmittein, beispielsweise in Duschgelen, Schampoos, Seifen und in Hautpflegemitteln eingesetzt werden. Hautpflegemittel sind beispielsweise Tagescremes, Nachtcremes, Pflegecremes, Nährcreme, Bodylotions und Salben.

Ein weiteres Anwendungsgebiet der erfindungsgemäßen Formulierungen sind die Behandlung (z.B. das Finishing) von Synthesefasern, insbesondere Polyesterfasern, oder Geweben, welche Synthesefasern, insbesondere Polyesterfasern, enthalten, in der Textilindustrie.

### Beispiele

1. Es wurde eine 70 %ige wässrige Zubereitung des Polyesters TexCare SRN-100 mit Zusatz von 0,5 Gew.-% (WS) Acrylsäure-Maleinsäure-Copolymer Sokalan CP 12 S hergestellt. Dazu wurde der Polyester geschmolzen und in die Schmelze wurden Wasser und das Copolymer eingerührt. Die Temperatur der Schmelze und des Wassers wurden variiert. Die Mischungen wurden bei der jeweils resultierenden Mischtemperatur 15 Minuten nachgerührt und sodann unter Rühren auf Raumtemperatur abgekühlt.
Zur Untersuchung der thermischen Lagerstabilität wurden die Polyesterzubereitungen bei 40°C eingelagert und nach 8 Wochen visuell beurteilt. Vergleichend wurde die Polyesterzubereitung ohne Zusatz von Sokalan CP 12 S hergestellt und beurteilt.

**Tabelle 1:**

| Stabilität einer wässrigen Polyesterzubereitung mit Zusatz von 0,5 Gew.-% (Wirkstoff) Sokalan CP 12 S. Vergleichsbeispiele ohne Sokalan CP 12 S. | | | | |
|---|---|---|---|---|
| Polyesterzubereitung | Schmelze T (°C) | Wasser T(°C) | Visuelle Beurteilung | |
| | | | nach der Herstellung | nach 8 Wochen |
| A) ohne Zusatz | 80 | 20 | klar, homogen | Bodensatz |
| A) mit Sokalan CP 12S | 80 | 20 | klar, homogen | klar, homogen |
| B) ohne Zusatz | 60 | 20 | klar, homogen | Bodensatz |
| B) mit Sokalan CP 12S | 60 | 20 | klar, homogen | klar, homogen |
| C) ohne Zusatz | 45 | 30 | klar, homogen | Bodensatz |
| C) mit Sokalan CP 12S | 45 | 30 | klar, homogen | klar, homogen |
| D) ohne Zusatz | 40 | 75 | klar, homogen | Bodensatz |
| D) mit Sokalan CP 12S | 40 | 75 | klar, homogen | klar, homogen |

2. Es wurde eine 70 %ige wässrige Zubereitung des Polyesters TexCare SRN-100 mit Zusatz von 0,5 Gew.-% (WS) Polyacrylsäure Sokalan PA 20 PN hergestellt. Dazu wurde der Polyester geschmolzen und in die Schmelze wurden Wasser und die Polyacrylsäure eingerührt. Die Temperatur der Schmelze und des Wassers wurden variiert.
Die Mischung wurde bei der jeweils resultierenden Mischtemperatur 15 Minuten nachgerührt und sodann unter Rühren auf Raumtemperatur abgekühlt.
Zur Untersuchung der thermischen Lagerstabilität wurden die Polyesterzubereitungen bei 40°C eingelagert und nach 8 Wochen visuell beurteilt. Vergleichend wurde die Polyesterzubereitung ohne Zusatz von Sokalan PA 20 PN hergestellt und beurteilt.

**Tabelle 2:**

| Stabilität einer wässrigen Polyesterzubereitung mit Zusatz von 0,5 Gew.-% (Wirkstoff) Sokalan PA 20 PN. Vergleichsbeispiele ohne Sokalan PA 20 PN. | | | | |
|---|---|---|---|---|
| Polyesterzubereitung | Schmelze T (°C) | Wasser T (°C) | Visuelle Beurteilung | |
| | | | nach der Herstellung | nach 8 Wochen |
| A) ohne Zusatz | 80 | 20 | klar, homogen | Bodensatz |
| A) mit Sokalan PA 20 PN | 80 | 20 | klar, homogen | klar, homogen |
| B) ohne Zusatz | 60 | 20 | klar, homogen | Bodensatz |
| B) mit Sokalan PA 20 PN | 60 | 20 | klar, homogen | klar, homogen |
| C) ohne Zusatz | 45 | 30 | klar, homogen | Bodensatz |
| C) mit Sokalan PA 20 PN | 45 | 30 | klar, homogen | klar, homogen |
| D) ohne Zusatz | 40 | 75 | klar, homogen | Bodensatz |
| D) mit Sokalan PA 20 PN | 40 | 75 | klar, homogen | klar, homogen |

3. Es wurde eine 70 %ige wässrige Zubereitung des Polyesters TexCare SRN-100 mit Zusatz von 0,5 Gew.-% (WS) des Maleinsäure-Copolymers Sokalan PM 10 l hergestellt. Dazu wurde der Polyester geschmolzen und in die Schmelze wurden Wasser und das Maleinsäure-Copolymer eingerührt. Die Temperatur der Schmelze betrug 45°C und die des Wassers 30°C. Die Mischung wurde 1 Stunde nachgerührt und sodann unter Rühren auf Raumtemperatur abgekühlt.
Zur Untersuchung der thermischen Lagerstabilität wurde die Polyesterzubereitung bei 40°C eingelagert und nach 8 Wochen visuell beurteilt.
Vergleichend wurde die Polyesterzubereitung ohne Zusatz von Sokalan PM 10 l hergestellt und beurteilt.

**Tabelle 3:**

| Stabilität einer wässrigen Polyesterzubereitung mit Zusatz von 0,5 Gew.-% (Wirkstoff) Sokalan PM 10 l. Vergleichsbeispiele ohne Sokalan PM 10 l. | | | | |
|---|---|---|---|---|
| Polyesterzubereitung | Schmelze T(°C) | Wasser T(°C) | Visuelle Beurteilung | |
| | | | nach der Herstellung | nach 8 Wochen |
| A) ohne Zusatz | 45 | 30 | klar, homogen | Bodensatz |
| A) mit Sokalan PM 10 l | 45 | 30 | klar, homogen | klar, homogen |

4. Es wurde eine 70%-ige wässrige Zubereitung des Polyesters TexCare SRN-100 mit Zusatz von 0,5 Gew.-% (WS) des Polycarboxylats Sokalan PM 70 hergestellt. Dazu wurde der Polyester geschmolzen und in die Schmelze wurden Wasser und das Polycarboxylat eingerührt. Die Temperatur der Schmelze betrug 45°C und die des Wassers 30°C. Die Mischung wurde 1 Stunde nachgerührt und sodann unter Rühren auf Raumtemperatur abgekühlt.
Zur Untersuchung der thermischen Lagerstabilität wurde die Polyesterzubereitung bei 40°C eingelagert und nach 8 Wochen visuell beurteilt.
Vergleichend wurde die Polyesterzubereitung ohne Zusatz von Sokalan PM 70 hergestellt und beurteilt.

**Tabelle 4:**

| Stabilität einer wässrigen Polyester-zubereitung mit Zusatz von 0,5 Gew.-% (Wirkstoff) Sokalan PM 70. Vergleichsbeispiele ohne Sokalan PM 70. | | | | |
|---|---|---|---|---|
| Polyesterzubereitung | Schmelze T (°C) | Wasser T (°C) | Visuelle Beurteilung | |
| | | | nach der Herstellung | nach 8 Wochen |
| A) ohne Zusatz | 45 | 30 | klar, homogen | Bodensatz |
| A) mit Sokalan PM 70 | 45 | 30 | klar, homogen | klar, homogen |

5. Es wurde eine 80 %ige wässrige Zubereitung des Polyesters TexCare SRN-100 mit Zusatz von 0,5 Gew.-% (WS) Acrylsäure-Maleinsäure-Copolymer Sokalan CP 12 S hergestellt. Dazu wurde der Polyester geschmolzen und in die Schmelze wurden Wasser und das Copolymer eingerührt. Die Temperatur der Schmelze betrug 60°C und die des Wassers 20°C. Die Mischung wurde 1 Stunde nachgerührt und sodann unter Rühren auf Raumtemperatur abgekühlt.
Zur Untersuchung der thermischen Lagerstabilität wurde die Polyesterzubereitung bei 40°C eingelagert und nach 8 Wochen visuell beurteilt.
Vergleichend wurde die Polyesterzubereitung ohne Zusatz von Sokalan CP 12 S hergestellt und beurteilt.

**Tabelle 5:**

| Stabilität einer wässrigen Polyesterzubereitung mit Zusatz von 0,5 Gew.-% (Wirkstoff) Sokalan CP 12 S. Vergleichsbeispiele ohne Sokalan CP 12 S. | | | | |
|---|---|---|---|---|
| Polyesterzubereitung | Schmelze T(°C) | Wasser T(°C) | Visuelle Beurteilung | |
| | | | nach der Herstellung | nach 8 Wochen |
| A) ohne Zusatz | 60 | 20 | klar, homogen | Bodensatz |
| A) mit Sokalan CP 12 S | 60 | 20 | klar, homogen | klar, homogen |

6. Es wurde eine 33 %ige wässrige Zubereitung des Polyesters TexCare SRN-100 mit Zusatz von 33 Gew.-% (WS) Acrylsäure-Maleinsäure-Copolymer Sokalan CP 12 S hergestellt. Dazu wurde der Polyester geschmolzen und in die Schmelze wurde das Copolymer tel quel eingerührt. Die Temperatur der Schmelze betrug 60°C. Die Mischung wurde bei der resultierenden Mischtemperatur 15 Minuten nachgerührt und sodann unter Rühren auf Raumtemperatur abgekühlt.
Zur Untersuchung der thermischen Lagerstabilität wurde die Polyesterzubereitung bei 40°C eingelagert und nach 8 Wochen visuell beurteilt.
Vergleichend wurde die Polyesterzubereitung ohne Zusatz von Sokalan CP 12 S hergestellt und beurteilt.

**Tabelle 6:**

| Stabilität einer wässrigen Polyesterzubereitung mit Zusatz von 33 Gew.-% (Wirkstoff) Sokalan CP 12 S. Vergleichsbeispiele ohne Sokalan CP 12 S. | | | | |
|---|---|---|---|---|
| Polyesterzubereitung | Schmelze T (°C) | Sokalan CP 12 S T (°C) | Visuelle Beurteilung | |
| | | | nach der Herstellung | nach 8 Wochen |
| A) ohne Zusatz | 60 | 20 | klar, homogen | Bodensatz |
| A) mit Sokalan CP 12S | 60 | 20 | klar, homogen | klar, homogen |

7. Es wurde eine 50 %ige wässrige Zubereitung des Polyesters TexCare SRN-100 mit Zusatz von 25 Gew.-% (WS) Acrylsäure-Maleinsäure-Copolymer Sokalan CP 12 S hergestellt. Dazu wurde der Polyester geschmolzen und in die Schmelze wurde das Copolymer tel quel eingerührt. Die Temperatur der Schmelze betrug 60°C. Die Mischung wurde bei der resultierenden Mischtemperatur 15 Minuten nachgerührt und sodann unter Rühren auf Raumtemperatur abgekühlt.
Zur Untersuchung der thermischen Lagerstabilität wurde die Polyesterzubereitung bei 40°C eingelagert und nach 8 Wochen visuell beurteilt.
Vergleichend wurde die Polyesterzubereitung ohne Zusatz von Sokalan CP 12 S hergestellt und beurteilt.

**Tabelle 7:**

| Stabilität einer wässrigen Polyesterzubereitung mit Zusatz von 25 Gew.-% (Wirkstoff) Sokalan CP 12 S. Vergleichsbeispiele ohne Sokalan CP 12 S. | | | | |
|---|---|---|---|---|
| Polyesterzubereitung | Schmelze T (°C) | Sokalan CP 12 S T (°C) | Visuelle Beurteilung | |
| | | | nach der Herstellung | nach 8 Wochen |
| A) ohne Zusatz | 60 | 20 | klar, homogen | Bodensatz |
| A) mit Sokalan CP 12S | 60 | 20 | klar, homogen | klar, homogen |

Verzeichnis der verwendeten Handelsnamen:

| | | |
|---|---|---|
| TexCare^{®} SRN-100 | (Clariant) | Nichtionischer Soil Release Polyester, 100 %ig. |
| Sokalan^{®} CP 12 S | (BASF) | Acrylsäure-Maleinsäure-Copolymer, MM = 3000 g/mol, 50 %ig. |
| Sokalan PA 20 PN | (BASF) | Teilneutralisierte Polyacrylsäure, MM = 2500 g/mol, 54 %ig. |
| Sokalan PM 10 l | (BASF) | Copolymerisat auf Basis Maleinsäure, Na-Salz, MM = 4000 g/mol, 44 %ig |
| Sokalan PM 70 | (BASF) | Polycarboxylat, MM = 20.000 g/mol, 40 %ig. |

## Patentansprüche

1. Hochkonzentrierte wässrige Formulierungen von Oligo- und Polyestern, enthaltend im Wesentlichen 30 bis 90 Gew.-% eines Oligo- und Polyesters und 0,1 bis 40 Gew.-% einer Polycarbonsäure oder Polycarboxylats.

2. Formulierung gemäß Anspruch 1, wobei der Oligo- und Polyester ein wasserlöslicher oder wasserdispergierbarer Polyester ist.

3. Formulierung gemäß Anspruch 1, wobei der Oligo- und Polyester ein wasserlöslicher oder wasserdispergierbarer Polyester mit einer Molmasse von kleiner 20.000.

4. Formulierung gemäß Anspruch 1, wobei der Oligo- und Polyester ein wasserlöslicher oder wasserdispergierbarer Polyester ist, der durch Alkylpolyalkylenglykole endverschlossen ist.

5. Formulierung gemäß Anspruch 1, wobei der Oligo- und Polyester ein wasserlöslicher oder wasserdispergierbarer Polyester ist, der durch Methylpolyethylenglykole endverschlossen ist, wobei die Anzahl der Ethylenglykoleinheiten </= 90.

6. Formulierung gemäß Anspruch 1, wobei der Oligo- und Polyester ein wasserlöslicher oder wasserdispergierbarer Polyester ist, der </= 60 Massen-% veresterte Terephthalsäureeinheiten besitzt.

7. Formulierung gemäß Anspruch 1, wobei der Oligo- und Polyester ein wasserlöslicher oder wasserdispergierbarer Polyester ist, der Ethylenglykol- oder Polyethylenglykoleinheiten enthält.

8. Formulierung gemäß Anspruch 1, wobei der Oligo- und Polyester ein wasserlöslicher oder wasserdispergierbarer Polyester ist, der Propylenglykol- oder Polypropylenglykoleinheiten enthält.

9. Formulierung gemäß Anspruch 1, wobei der Oligo- und Polyester ein wasserlöslicher oder wasserdispergierbarer Polyester ist, der sowohl Ethylenglykol oder Polyethylenglykol als auch Propylenglykol- oder Polypropylenglykoleinheiten enthält.

10. Formulierung gemäß Anspruch 1, wobei der Oligo- und Polyester ein wasserlöslicher oder wasserdispergierbarer Polyester ist, der mittels einkondensierten Sulfoisophthalsäure- und/oder Glycerinsulfoethylethereinheiten und/ oder Glycerinsulfopropylethereinheiten anionisch modifiziert ist.

11. Formulierung gemäß Anspruch 1, wobei der Oligo- und Polyester ein wasserlöslicher oder wasserdispergierbarer Polyester ist, der mittels Isethionsäure, Hydroxypropansulfonsäure oder deren Umsetzungsprodukten mit Ethylenoxid bzw. Ethylenglykol oder dessen Oligomeren und/oder Propylenoxid bzw. Propylenglykol oder dessen Oligomeren endverschlossen ist.

12. Formulierung nach Anspruch 1, wobei die Polycarbonsäure oder das Polycarboxylat eine Verbindung der Formel 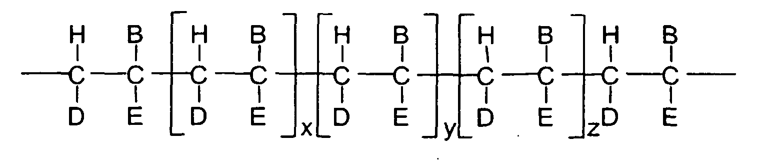 ist, worin B Wasserstoff, C₁-C₄-Alkyl, insbesondere Methyl, Ethyl, Propyl, -COOM, -CH₂-COOM,
D Wasserstoff, C₁-C₄-Alkyl, insbesondere Methyl oder -COOM,
E Wasserstoff, C₁-C₄-Alkyl, insbesondere Methyl, Ethyl; Cycloalkyl, insbesondere Cyclohexyl; Aryl, insbesondere Phenyl, -COOM, -CH₂-COOM, C₁-C₄-Acyl, insbesondere Acetyl; -OH, C₁-C₄-Alkoxy, insbesondere -OCH₃; Halogen, insbesondere Chlor oder -CN, x eine Zahl von 0 bis 3.500, y eine Zahl von 0 bis 3.500, z eine Zahl von 0 bis 3.500, M Wasserstoff, Natrium, Kalium, Lithium, Ammonium oder substituiertes Ammonium bedeuten, wobei mindestens ein Index x, y oder z größer Null ist.

13. Formulierung nach Anspruch 1, wobei die Polycarbonsäure oder das Polycarboxylat Polyacrylsäure oder Polymaleinsäure ist und diese in freier, teilneutralisierter oder vollständig neutralisierter Form vorliegen kann.

14. Formulierung nach Anspruch 1, wobei die Polycarbonsäure oder das Polycarboxylat ein Copolymer auf Basis Acrylsäure und Maleinsäure, Maleinsäure und Olefinen, insbesondere Ethylen, Maleinsäure und Vinylmethylether, Acrylsäure und Olefinen, insbesondere Ethylen, Acrylsäure und Vinylmethylether ist und das Copolymer in freier, teilneutralisierter oder vollständig neutralisierter Form vorliegen kann.

15. Formulierung nach Anspruch 1, wobei die Polycarbonsäure oder das Polycarboxylat eine Verbindung der Formel 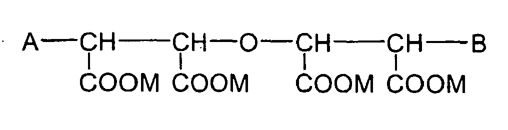 ist, worin A H oder -OH, B H oder eine Gruppe der Formel 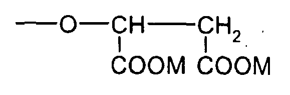 M H, Li, Na, K, Ammonium oder substituiertes Ammonium bedeuten.

16. Formulierung nach Anspruch 1, wobei die Polycarbonsäure oder das Polycarboxylat eine Verbindung der Formel 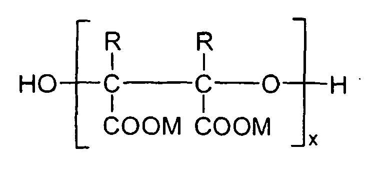 ist, worin M H, Li, Na, K, Ammonium, substituiertes Ammonium, x eine Zahl von 2 bis 15 und R Wasserstoff oder C₁-C₄-Alkyl bedeuten.

17. Formulierung nach Anspruch 1, enthaltend 50 bis 90 Gew.-% Oligo- und Polyester.

18. Formulierung nach Anspruch 1, enthaltend 0,1 bis 40 Gew.-% Polycarbonsäure oder Polycarboxylat.

19. Wasch- und Reinigungsmittel, enthaltend eine Formulierung nach Anspruch 1.

20. Kosmetische Zubereitungen, enthaltend eine Formulierung nach Anspruch 1.

21. Textilhilfsmittel zur Behandlung von Synthesefasern, insbesondere Polyesterfasern oder von textilen Geweben enthaltend Synthesefasern, insbesondere Polyesterfasern, enthaltend eine Formulierung nach Anspruch 1.

## Claims

1. A highly concentrated aqueous formulation of oligo- and polyesters, essentially comprising from 30 to 90% by weight of an oligo- and polyester and from 0.1 to 40% by weight of a polycarboxylic acid or polycarboxylate.

2. The formulation as claimed in claim 1, wherein the oligo- and polyester is a water-soluble or water-dispersible polyester.

3. The formulation as claimed in claim 1, wherein the oligo- and polyester is a water-soluble or water-dispersible polyester having a molar mass of less than 20 000.

4. The formulation as claimed in claim 1, wherein the oligo- and polyester is a water-soluble or water-dispersible polyester which has been end group-capped by alkylpolyalkylene glycols.

5. The formulation as claimed in claim 1, wherein the oligo- and polyester is a water-soluble or water-dispersible polyester which has been end group-capped by methylpolyethylene glycols, the number of ethylene glycol units being </= 90.

6. The formulation as claimed in claim 1, wherein the oligo- and polyester is a water-soluble or water-dispersible polyester which has </= 60% by mass of esterified terephthalic acid units.

7. The formulation as claimed in claim 1, wherein the oligo- and polyester is a water-soluble or water-dispersible polyester which contains ethylene glycol or polyethylene glycol units.

8. The formulation as claimed in claim 1, wherein the oligo- and polyester is a water-soluble or water-dispersible polyester which contains propylene glycol or polypropylene glycol units.

9. The formulation as claimed in claim 1, wherein the oligo- and polyester is a water-soluble or water-dispersible polyester which contains both ethylene glycol or polyethylene glycol units and propylene glycol or polypropylene glycol units.

10. The formulation as claimed in claim 1, wherein the oligo- and polyester is a water-soluble or water-dispersible polyester which has been modified anionically by means of copolymerized sulfoisophthalic acid and/or glyceryl sulfoethyl ether units and/or glyceryl sulfopropyl ether units.

11. The formulation as claimed in claim 1, wherein the oligo- and polyester is a water-soluble or water-dispersible polyester which has been end group-capped by means of isethionic acid, hydroxypropanesulfonic acid or reaction products thereof with ethylene oxide or ethylene glycol or its oligomers and/or propylene oxide or propylene glycol or its oligomers.

12. The formulation as claimed in claim 1, wherein the polycarboxylic acid or the polycarboxylate is a compound of the formula 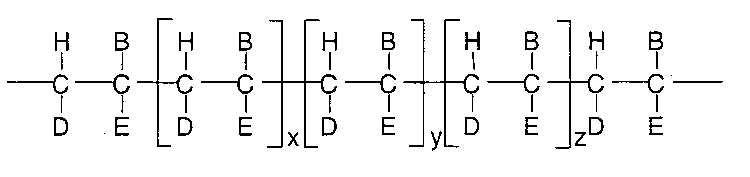 in which B is hydrogen, C₁-C₄-alkyl, especially methyl, ethyl, propyl, -COOM, -CH₂COOM,
D is hydrogen, C₁-C₄-alkyl, especially methyl or -COOM,
E is hydrogen, C₁-C₄-alkyl, especially methyl, ethyl; cycloalkyl, especially
cyclohexyl; aryl, especially phenyl, -COOM, -CH₂-COOM, C₁-C₄-acyl, especially acetyl; -OH, C₁-C₄-alkoxy, especially -OCH₃; halogen, especially chlorine, or -CN, x is from 0 to 3500, y is from 0 to 3500, z is from 0 to 3500, M is hydrogen, sodium, potassium, lithium, ammonium or substituted ammonium, where at least one index x, y or z is greater than zero.

13. The formulation as claimed in claim 1, wherein the polycarboxylic acid or the polycarboxylate is polyacrylic acid or polymaleic acid and may be present in free, partly neutralized or fully neutralized form.

14. The formulation as claimed in claim 1, wherein the polycarboxylic acid or the polycarboxylate is a copolymer based on acrylic acid and maleic acid, maleic acid and olefins, especially ethylene, maleic acid and vinyl methyl ether, acrylic acid and olefins, especially ethylene, acrylic acid and vinyl methyl ether, and the copolymer may be present in free, partly neutralized or fully neutralized form.

15. The formulation as claimed in claim 1, wherein the polycarboxylic acid or the polycarboxylate is a compound of the formula 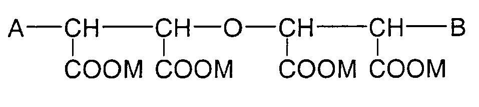 in which A is H or -OH, B is H or a group of the formula 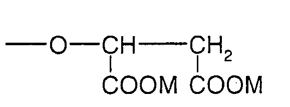 M is H, Li, Na, K, ammonium or substituted ammonium.

16. The formulation as claimed in claim 1, wherein the polycarboxylic acid or the polycarboxylate is a compound of the formula 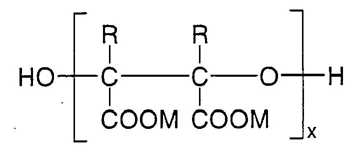 in which M is H, Li, Na, K, ammonium, substituted ammonium, x is from 2 to 15 and R is hydrogen or C₁-C₄-alkyl.

17. The formulation as claimed in claim 1, containing from 50 to 90% by weight of oligo- and polyesters.

18. The formulation as claimed in claim 1, containing from 0.1 to 40% by weight of polycarboxylic acid or polycarboxylate.

19. A washing and cleaning composition comprising a formulation as claimed in claim 1.

20. A cosmetic formulation comprising a formulation as claimed in claim 1.

21. A textile assistant for treating synthetic fibers, especially polyester fibers or textile fabrics comprising synthetic fibers, especially polyester fibers, comprising a formulation as claimed in claim 1.

## Revendications

1. Formulations aqueuses très concentrées d'oligo- et poly-esters, contenant essentiellement 30% à 90% en poids d'un oligo- et poly-ester et 0,1% à 40% en poids d'un acide polycarboxylique ou d'un polycarboxylate.

2. Formulation selon la revendication 1, dans laquelle l'oligo- et poly-ester est un polyester hydrosoluble ou hydrodispersible.

3. Formulation selon la revendication 1, dans laquelle l'oligo- et poly-ester est un polyester hydrosoluble ou hydrodispersible ayant une masse moléculaire inférieure à 20 000.

4. Formulation selon la revendication 1, dans laquelle l'oligo- et poly-ester est un polyester hydrosoluble ou hydrodispersible qui est terminé par des alkylpolyalkylèneglycols.

5. Formulation selon la revendication 1, dans laquelle l'oligo- et poly-ester est un polyester hydrosoluble ou hydrodispersible qui est terminé par des méthylpolyéthylèneglycols, dans lesquels le nombre de motifs éthylèneglycol est = 90.

6. Formulation selon la revendication 1, dans laquelle l'oligo- et poly-ester est un polyester hydrosoluble ou hydrodispersible qui possède des motifs acide téréphtalique estérifiés à raison de = 60% en masse.

7. Formulation selon la revendication 1, dans laquelle l'oligo- et poly-ester est un polyester hydrosoluble ou hydrodispersible qui contient des motifs éthylèneglycol ou polyéthylèneglycol.

8. Formulation selon la revendication 1, dans laquelle l'oligo- et poly-ester est un polyester hydrosoluble ou hydrodispersible qui contient des motifs propylèneglycol ou polypropylèneglycol.

9. Formulation selon la revendication 1, dans laquelle l'oligo- et poly-ester est un polyester hydrosoluble ou hydrodispersible qui contient aussi bien des motifs éthylèneglycol ou polyéthylèneglycol que des motifs propylèneglycol ou polypropylèneglycol.

10. Formulation selon la revendication 1, dans laquelle l'oligo- et poly-ester est un polyester hydrosoluble ou hydrodispersible qui est modifié sur le plan anionique par des motifs condensés acide sulfoisophtalique et/ou sulfoéthyléther de glycérine et/ou sulfopropyléther de glycérine.

11. Formulation selon la revendication 1, dans laquelle l'oligo- et poly-ester est un polyester hydrosoluble ou hydrodispersible qui est terminé par de l'acide iséthionique, de l'acide hydroxypropanesulfonique ou leurs produit de réaction avec de l'oxyde d'éthylène de préférence de l'éthylèneglycol ou ses oligomères et/ou de l'oxyde de propylène de préférence du propylèneglycol ou ses oligomères.

12. Formulation selon la revendication 1, dans laquelle l'acide polycarboxylique ou le polycarboxylate est un composé de formule 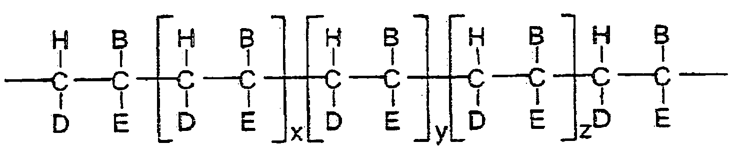 dans laquelle B représente un atome d'hydrogène, un groupe alkyle en C₁ à C₄, en particulier méthyle, éthyle, propyle, -COOM, -CH₂-COOM,
D représente un atome d'hydrogène, un groupe alkyle en C₁ à C₄, en particulier méthyle ou -COOM,
E représente un atome d'hydrogène, un groupe alkyle en C₁ à C₄, en particulier méthyle, éthyle ; cycloalkyle, en particulier cyclohexyle ; aryle, en particulier phényle, -COOM, -CH₂-COOM, acyle en C₁ à C₄, en particulier acétyle ; -OH, alcoxy en C₁ à C₄, en particulier -OCH₃; un halogène, en particulier le chlore ou -CN, x représente un nombre de 0 à 3 500, y un nombre de 0 à 3 500, z un nombre de 0 à 3 500, M représente un atome d'hydrogène, de sodium, de potassium, de lithium, un groupe ammonium ou ammonium substitué, au moins un indice x, y ou z étant supérieur à zéro.

13. Formulation selon la revendication 1, dans laquelle l'acide polycarboxylique ou le polycarboxylate est un acide polyacrylique ou un acide polymaléique et celui-ci peut se présenter sous une forme libre, partiellement neutralisée ou entièrement neutralisée.

14. Formulation selon la revendication 1, dans laquelle l'acide polycarboxylique ou le polycarboxylate est un copolymère à base d'acide acrylique et d'acide maléique, d'acide maléique et d'oléfines, en particulier d'éthylène, d'acide maléique et d'éther vinylméthylique, d'acide acrylique et d'oléfines, en particulier d'éthylène, d'acide acrylique et d'éther vinylméthylique, et le copolymère peut se présenter sous une forme libre, partiellement neutralisée ou entièrement neutralisée.

15. Formulation selon la revendication 1, dans laquelle l'acide polycarboxylique ou le polycarboxylate est un composé de formule 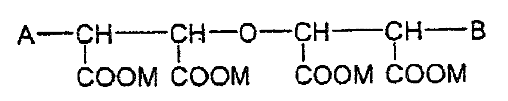 dans laquelle A représente H ou -OH,
B représente H ou un groupe de formule 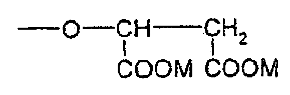 M représente H, Li, Na, K, un groupe ammonium ou un groupe ammonium substitué.

16. Formulation selon la revendication 1, dans laquelle l'acide polycarboxylique ou le polycarboxylate est un composé de formule 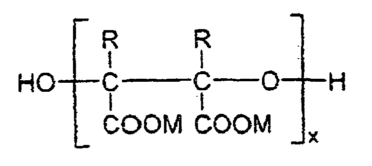 dans laquelle M représente H, Li, Na, K, un groupe ammonium, un groupe ammonium substitué, x représente un nombre de 2 à 15 et R représente un atome d'hydrogène ou un groupe alkyle en C₁ à C₄.

17. Formulation selon la revendication 1, contenant 50% à 90% en poids d'oligo- et poly-ester.

18. Formulation selon la revendication 1, contenant 0,1% à 40% en poids d'acide polycarboxylique ou de polycarboxylate.

19. Produits de lavage et de nettoyage, contenant une formulation selon la revendication 1.

20. Préparations cosmétiques, contenant une formulation selon la revendication 1.

21. Adjuvants textiles pour le traitement de fibres synthétiques, en particulier de fibres de polyester, ou de tissus textiles contenant des fibres synthétiques, en particulier des fibres de polyester, contenant une formulation selon la revendication 1.
